(19) Europäisches Patentamt
European Patent Office
Office européen des brevets

(11) EP 2 505 604 B1

(12) **EUROPEAN PATENT SPECIFICATION**

(45) Date of publication and mention of the grant of the patent:
**20.05.2020 Bulletin 2020/21**

(21) Application number: **10833217.2**

(22) Date of filing: **24.11.2010**

(51) Int Cl.:
*C08J 5/18* (2006.01) *C08K 7/00* (2006.01)
*C08L 1/00* (2006.01) *C08K 3/34* (2006.01)
*C08L 1/02* (2006.01) *C08L 1/04* (2006.01)
*D21H 11/18* (2006.01)

(86) International application number:
**PCT/JP2010/070907**

(87) International publication number:
**WO 2011/065371 (03.06.2011 Gazette 2011/22)**

(54) **MEMBRANE STRUCTURE, PROCESS FOR MAKING MEMBRANE STRUCTURE AND AQUEOUS DISPERSION FOR FORMING MEMBRANE STRUCTURE**

MEMBRANSTRUKTUR, VERFAHREN ZUR HERSTELLUNG EINER MEMBRANSTRUKTUR UND WÄSSRIGE DISPERSION ZUR HERSTELLUNG EINER MEMBRANSTRUKTUR

STRUCTURE DE MEMBRANE, PROCEDE DE FABRICATION D'UNE STRUCTURE DE MEMBRANE ET DISPERSION AQUEUSE POUR FORMER UNE STRUCTURE DE MEMBRANE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2009 JP 2009265859**
**05.11.2010 JP 2010247985**
**05.11.2010 JP 2010247992**

(43) Date of publication of application:
**03.10.2012 Bulletin 2012/40**

(73) Proprietor: **Kao Corporation**
**Chuo-ku**
**Tokyo 103-8210 (JP)**

(72) Inventors:
- **MUKAI, Kenta**
**Haga-gun**
**Tochigi 321-3497 (JP)**
- **KUMAMOTO, Yoshiaki**
**Haga-gun**
**Tochigi 321-3497 (JP)**
- **IITAKA, Kazuhiro**
**Wakayama-shi**
**Wakayama 640-8404 (JP)**
- **SHIIBA, Ryota**
**Haga-gun**
**Tochigi 321-3497 (JP)**
- **UGAJIN, Toru**
**Haga-gun**
**Tochigi 321-3497 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 918 250** **EP-A1- 2 184 299**
**EP-A1- 2 236 664** **EP-A1- 2 371 892**
**EP-A1- 2 371 893** **WO-A2-2004/022601**
**JP-A- 9 151 265** **JP-A- 10 007 824**
**JP-A- 2001 030 410** **JP-A- 2002 348 522**
**JP-A- 2004 238 605** **JP-A- 2009 057 552**

- **PIERFRANCESCO CERRUTI ET AL: "Morphological and Thermal Properties of Cellulose-Montmorillonite Nanocomposites", BIOMACROMOLECULES, vol. 9, no. 11, 10 November 2008 (2008-11-10), pages 3004-3013, XP055370317, ISSN: 1525-7797, DOI: 10.1021/bm8002946**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a membrane structure containing cellulose microfibers and a process for making the same. It also relates to an aqueous dispersion used to form the membrane structure.

### Background Art

With the recent spotlight focused on environmentally friendly technologies, materials using cellulose fibers, which are biomass abundantly occurring in nature, have been attracting attention, and various techniques about the improvement thereon have been proposed. For example, the assignee common to this application proposed a gas barrier material containing cellulose fibers having an average fiber diameter of 200 nm or smaller, the cellulose constituting the cellulose fibers having a carboxyl group content of 0.1 to 2 mmol/g (see patent literature 1 below).
While a molded product obtained from the gas barrier material exhibits very high gas barrier properties, there still is a demand for a gas barrier article that exhibits high gas barrier performance even under severe conditions of use, e.g., in a high humidity environment.
A gas barrier film containing an inorganic layered compound is known. For example, patent literature 2 (see below) discloses a gas barrier film composed of a resin base film and a polyvinyl alcohol composition layer on one side of the resin base film. The polyvinyl alcohol composition contains an inorganic swellable layered compound, such as montmorillonite. Patent literature 3 (see below) discloses a biodegradable gas barrier structure composed of a polylactic acid- or polyester-based biodegradable resin base and, on one side of the base, a film of a polysaccharide having an uronic acid residue. The film contains an inorganic layered compound, such as montmorillonite.

### Citation List

Patent Literature:

Patent literature 1: JP 2009-57552A
Patent literature 2: JP 2001-121659A
Patent literature 3: JP 2008-49606A

### Summary of Invention

### Solution to Problem

The invention provides a membrane-like structure containing cellulose microfibers and an inorganic layered compound. The cellulose constituting the cellulose microfibers has a carboxyl content of 0.1 to 3 mmol/g. The mass ratio of the inorganic layered compound to the cellulose microfibers (inorganic layered compound/cellulose microfibers) microfibers is 0.01 to 100. The cellulose microfibers have an average fiber diameter of 200 nm or smaller.
The invention also provides a preferred process for making the membrane-like structure of the invention. The process includes the steps of (b) mixing an inorganic layered compound and cellulose microfibers to prepare an aqueous dispersion and (c) forming a coating film from the aqueous dispersion and drying the coating film.
The invention also provides an aqueous dispersion for forming a gas barrier membrane-like structure. The dispersion contains cellulose microfibers having a carboxyl content of 0.1 to 3 mmol/g, an inorganic layered compound, and a basic substance. The mass ratio and the average fiber diameter are as described above
The invention also provides a preferred method for preparing an aqueous dispersion for forming a gas barrier membrane-like structure. The method includes mixing an aqueous dispersion containing an inorganic layered compound and a basic substance with cellulose microfibers having a carboxyl content of 0.1 to 3 mmol/g.
The invention also provides another preferred method for preparing an aqueous dispersion for forming a gas barrier membrane-like structure. The method includes mixing an aqueous dispersion containing an inorganic layered compound and cellulose microfibers having a carboxyl content of 0.1 to 3 mmol/g with a basic substance.

### Advantageous Effects of Invention

The invention provides a membrane structure having high barrier properties against various gases, such as oxygen, water vapor, carbon dioxide, carbon monoxide, nitrogen, nitrogen oxides, hydrogen, and argon, particularly a membrane structure with high barrier properties against water vapor or a membrane structure with high barrier properties against oxygen in a high humidity environment. The aqueous dispersion of the invention is ready to provide such a gas barrier membrane structure.

Brief Description of Drawings

FIG. 1(a) is a transmission electron micrograph (TEM) of the membrane structure obtained in Example 15, and FIG. 1(b) is an enlarged view of Fig. 1(a).
FIG. 2(a) is a TEM of the membrane structure obtained in Example 17, and FIG. 2(b) is an enlarged view of Fig. 2(a).
FIG. 3(a) is a TEM of the membrane structure obtained in Comparative Example 1, and FIG. 3(b) is an enlarged view of Fig. 3(a).

Description of Embodiments

The invention relates to an improvement on a gas barrier material containing cellulose microfibers with nano size diameters. More particularly, the invention relates to, in one aspect, an improvement in water vapor barrier properties and, in another aspect, an improvement in oxygen barrier properties in a high humidity environment.

The invention will be described with reference to its preferred embodiments. The membrane structure according to the invention has gas barrier properties. The membrane structure of the invention may be designed to achieve not only an improvement in barrier properties against any gas, such as oxygen, water vapor, carbon dioxide, carbon monoxide, nitrogen, nitrogen oxides, hydrogen, or argon, but also an improvement in barrier properties against a specific gas. For instance, a membrane structure having reduced oxygen barrier properties and improved water vapor barrier properties functions to selectively inhibit the permeation of water vapor and is included within the scope of the invention. The target gas is chosen as appropriate to the intended use of the membrane structure.

The membrane structure of the invention may have any thickness according to its use. For example, the thickness may be preferably 20 to 900 nm, more preferably 50 to 700 nm, even more preferably 100 to 500 nm. The membrane structure may serve as a gas barrier film either by itself or as overlaid on a base by, for example, laminating or coating. Examples of the base include two-dimensional objects, such as films and sheets, and three-dimensional objects, such as bottles and boxes. The area of the membrane structure is not critical and may be decided as appropriate to the intended use of the membrane structure.

One of the characteristics of the membrane structure is that the material making up the membrane structure includes specific cellulose microfibers and an inorganic layered compound. The inorganic layered compound is preferably a compound having accelerated delamination. The cellulose microfibers and the inorganic layered compound exist in the membrane structure in a uniformly mixed state with each other. The present inventors have found that the membrane structure of the invention made up of these two materials exhibits higher gas barrier performance, particularly higher oxygen barrier properties in a high humidity environment or higher water vapor barrier properties, than a membrane structure made up of the cellulose microfibers alone. To use an inorganic layered compound with accelerated delamination advantageously results in further improved gas barrier performance. The cellulose microfibers and the inorganic layered compound that constitute the membrane structure will be described hereunder.

The cellulose microfibers have an average fiber diameter of 200 nm or smaller, preferably 1 to 200 nm, more preferably 1 to 100 nm, and even more preferably 1 to 50 nm. The interstices between the cellulose fibers will be small enough to exhibit good gas barrier properties by using such microfine fibers with an average diameter of 200 nm or smaller. The average fiber diameter is determined by the following method.

Method for determining average fiber diameter:

An aqueous dispersion containing 0.001 mass% cellulose microfibers on a solid basis is prepared. The dispersion is dropped on mica and dried to make a specimen. The height of the cellulose microfibers of the specimen is measured using an atomic force microscope (AFM) (NanoNavi IIe, SPA400, from SII Nanotechnology; probe: SI-DF40A1 from the same manufacturer). From a micrograph in which the cellulose fibers are recognizable, at least five cellulose fibers are chosen to calculate an average fiber diameter from their heights.

The cellulose microfibers for use in the invention is obtained by dividing naturally occurring cellulose fibers (hereinafter described) into the structural units called microfibrils (hereinafter referred to as microfibrillation). While the form of microfibrils varies depending on the raw material, a microfibril of most of naturally occurring cellulose fibers is an aggregate or bundle of several tens of cellulose molecular chains crystallized to have a rectangular cross-section.

For example, a microfibril in higher plant cell walls consists of cellulose molecular chains arranged in a 6 × 6 array within a square cross-section. Accordingly, the height of a cellulose microfiber measured on an AFM image is used as a fiber diameter for convenience.

The cellulose microfiber is characterized by the carboxyl content of the cellulose making up the cellulose fiber as well as its fineness. Specifically, the carboxyl content is 0.1 to 3 mmol/g, more preferably 0.4 to 2 mmol/g, even more preferably 0.6 to 1.8 mmol, and most preferably 0.6 to 1.6 mm/g.

If the carboxyl content is less than 0.1 mmol/g, a treatment for micro fibrillation fails to provide cellulose microfibers having an average fiber diameter of 200 nm or smaller. In other words, the carboxyl content is an important factor for stably obtaining cellulose fibers with a diameter as small as 200 nm or less. The biosynthesis of natural cellulose usually involves formation of nanofibers called microfibrils which are bundled into higher order solid structures. As will be discussed later, the cellulose microfibers that can be used in the invention are obtained by making use of this structure in principle. That is, in order to weaken the interfacial hydrogen bond strength, which is the base of the strong cohesive force between microfibrils in a naturally occurring solid cellulose material, part of the hydrogen bonds are oxidized to carboxyl groups thereby enabling the cellulose material to provide microfibrillated fibers for use in the invention. So, cellulose with a larger total amount of the carboxyl groups (i.e., a higher carboxyl content) is able to exist stably in the form of microfibrils with smaller diameters. Furthermore, with an increased carboxyl content, the tendency of microfibrils in water to separate from each other (to lose their cohesion) increases because of electrical repulsion. As a result, the nanofibers will have increased dispersion stability. The carboxyl content is determined as follows.

Method for determining carboxyl content:

Cellulose fibers weighing 0.5 g on a dry basis are put in a 100 ml beaker, and ion exchanged water is added thereto to make 55 ml. In the beaker was put 5 ml of a 0.01 M aqueous solution of sodium chloride to prepare a dispersion, which was agitated until the cellulose fibers are thoroughly dispersed. The dispersion was adjusted to a pH of 2.5 to 3 by the addition of 0.1 M hydrochloric acid. To the dispersion is added dropwise a 0.05 M sodium hydroxide aqueous solution over 60 seconds using an automatic titration apparatus (AUT-50, from DKK-TOA Corp.). The electrical conductivity and pH are measured for every minute until the pH reaches about 11 to prepare an electric conductivity curve. The sodium hydroxide titer is obtained from the conductivity curve, which is substituted into the following equation to calculate the carboxyl content of the cellulose fibers.

Carboxyl content (mmol/g) = sodium hydroxide titer (ml) × sodium hydroxide aqueous solution concentration (0.05 M)/mass of cellulose fibers (0.5 g)

While the length of the cellulose microfibers is not particularly limited, the average aspect ratio of the cellulose microfibers (length/diameter) is preferably 10 to 1000, more preferably 10 to 500, even more preferably 100 to 350. The average aspect ratio is determined as follows.

Method for determining average aspect ratio:

The average aspect ratio is calculated from the viscosity of a dispersion prepared by adding water to the cellulose microfibers to a final concentration varying from 0.005 to 0.04 mass%. The viscosity of the dispersion is measured at 20°C with a rheometer (MCR, equipped with a coaxial cylinder sensor DG42, both from PHYSICA). An average aspect ratio is obtained by substituting the relation between the mass concentration of the cellulose fibers in the dispersion and the specific viscosity of the dispersion (relative to the viscosity of water) into equation (1) below, followed by back-calculation. Equation (1) is derived from the viscosity equation of stiff, rod-like molecules (Eq. 8.138) described in M. Doi and S.F. Edwards, The Theory of Polymer Dynamics, Clarendon Press, Oxford, 1986, p.312 and the relationship: $Lb^2 \times \rho = M/N_A$, where L is a fiber length; b is a fiber breadth (the cellulose fiber cross section being regarded as a square); p is a cellulose fiber concentration ($kg/m^3$); M is a molecular weight; and $N_A$ is Avogadro's number. In Eq. 8.138, stiff, rod-like molecules = cellulose microfibers. In equation (1), $\eta_{SP}$ is a specific viscosity; $\pi$ is a circular constant; In is a natural logarithm; P is an aspect ratio (=L/b); $\gamma$ = 0.8; $\rho_s$ is the viscosity ($kg/m^3$) of a dispersion medium; $\rho_O$ is the density ($kg/m^3$) of cellulose crystals; and C is the mass concentration of cellulose ($C = \rho/\rho_S$).
[Math. 1]

$$\eta_{sp} = \frac{2\pi P^2}{45(\ln P - \gamma)} \times \frac{\rho_s}{\rho_0} \times C \qquad (1)$$

The cellulose microfibers are obtained by, for example, a method including the step of oxidizing natural cellulose fiber to obtain reaction product fiber and microfibrillating the reaction product fiber. The oxidation step starts with dispersing natural cellulose fiber in water to prepare a slurry. Specifically, natural cellulose fiber as a raw material is mixed with about 10 to 1000 times the mass of water on an absolute dry basis, followed by stirring in, e.g., a mixer. Examples of the natural cellulose fiber include wood pulp, such as softwood pulp and hardwood pulp; cotton pulp, such as cotton litter and cotton lint; non-wood pulp, such as straw pulp and bagasse pulp; and bacteria cellulose. They may be used either individually or as a combination of two or more thereof. The natural cellulose fiber may be subjected to a treatment for increasing the surface area, such as beating.

The natural cellulose fiber in water is then oxidized using an N-oxyl compound as a catalyst for oxidation to obtain a reaction product fiber. Examples of the N-oxyl compound includes 2,2,6,6-tetramethyl-1-piperizin-N-oxyl (TEMPO), 4-acetamido-TEMPO, 4-carboxy-TEMPO, and 4-phosphonoxy-TEMPO. As to the amount the N-oxyl compound to be added, a catalytic amount will suffice. The amount is usually in a range of from 0.1% to 10% by mass with respect to the natural cellulose fiber as a raw material on an absolute dry basis.

In the step of oxidizing the natural cellulose fiber, a combination of an oxidizer (e.g., a hypohalous acid or a salt thereof, a halous acid or a salt thereof, per halic acid or a salt thereof, hydrogen peroxide, and a perorganic acid) and a re-oxidizer (e.g., an alkali metal bromide, such as sodium bromide) is used. Examples of preferably used oxidizers are alkali metal hypohalites, such as sodium hypochlorite and sodium hypobromite. The oxidizer is used in an amount usually of from about 1% to 100% by mass relative to the natural cellulose fiber as a raw material on an absolute dry basis. The re-oxidizer is used in an amount usually of from about 1% to 30% by mass relative to the natural cellulose fiber as a raw material on an absolute dry basis.

To accomplish efficient progress of the oxidation reaction of the natural cellulose fiber, the reaction system (the slurry) is desirably maintained at a pH ranging from 9 to 12. While the oxidation treating temperature (the temperature of the slurry) is arbitrarily chosen from the range 1° to 50°C, the reaction is possible at room temperature with no particular need of temperature control. The reaction time is preferably 1 to 240 minutes.

After the oxidation step and before the microfibrillation step, the reaction slurry is subjected to a purification step to remove impurities other than the reaction product fiber and water, including any unreacted oxidizer and various by-products, from the slurry. Because the reaction product fiber in this stage are not yet disintegrated into the nanofiber units, the purification step may be effected by, for example, repeating washing with water and filtration. The purification apparatus to be used is not particularly limited. The thus purified reaction fiber is then forwarded to the next micro fibrillation step usually as it is impregnated with an appropriate amount of water or, where needed, after it is dried to a fibrous or powdered form.

In the microfibrillation step, the reaction product fiber after the purification step is dispersed in a solvent, such as water, and microfibrillated to obtain the cellulose microfibers of which the average fiber diameter and the average aspect ratio fall within the respective ranges above discussed.

Usually, water is a preferred solvent as a dispersion medium used in the microfibrillation step. Water-soluble organic solvents, including alcohols, ethers, and ketones, may also be used according to the purpose. Mixtures of these solvents are also suitably used. Examples of a dispersing machine for use in the microfibrillation include a pulper, a beater, a low pressure homogenizer, a high pressure homogenizer, a grinder, a cutter mill, a ball mill, a jet mill, a short-screw extruder, a twin-screw extruder, an ultrasonic agitator, and a household juicer-mixer. The solid concentration of the reaction product fiber to be microfibrillated is preferably not more than 50% by mass.

If necessary, the cellulose microfibers obtained by the microfibrillation step may be supplied either in the form of a liquid dispersion with an adjusted solid concentration which is colorless transparent or opaque to the eye or in the form of dried powder, which should be understood not to be cellulose particles but powdered aggregates of cellulose fibers. When supplied in the form of a liquid dispersion, the dispersion medium may be water or a mixture of water and an organic solvent (e.g., an alcohol, such as ethanol), a surfactant, an acid, a base, or the like.

Through the above discussed oxidation and microfibrillation treatments of natural cellulose fiber, the hydroxyl group at the C6 position of cellulose unit is selectively oxidized to a carboxyl group via an aldehyde group. There are thus obtained highly crystalline, microfibrillated cellulose fibers made of cellulose having a carboxyl content of 0.1 to 3 mmol/g and having an average fiber diameter of 200 nm or smaller. The resulting highly crystalline cellulose fibers have a cellulose I type crystal structure. This means that the cellulose microfiber used in the invention is a fiber obtained by surface-oxidizing a naturally occurring cellulose solid material having the I type crystal structure, followed by microfibrillation. A natural cellulose fiber has a high-order solid structure composed of bundles of microfibers called microfibrils that are produced in the biosynthesis of cellulose. The strong cohesive force between the microfibrils (hydrogen bonds between surfaces of microfibrils) is weakened by the introduction of aldehyde or carboxyl in the oxidation treatment, followed by the microfibrillation treatment to give cellulose microfibers. The carboxyl content may be increased or decreased within the specific range thereby to change the polarity by adjusting the oxidation conditions. The average fiber diameter, average fiber length, average aspect ratio, and the like of the cellulose fibers may be adjusted by the electrostatic repulsion of carboxyl groups or by the microfibrillation conditions.

The inorganic layered compound, which is another material making up the membrane structure of the invention, is used to increase gas barrier properties of the membrane structure. The inorganic layered compound may be an inorganic crystalline compound having a layer structure. Examples of the inorganic compound include clay minerals typified by kaolin minerals, such as kaolinite; smectite minerals, such as montmorillonite, bentonite, saponite, hectorite, beidellite, stevensite, and nontronite; and mica minerals, such as vermiculite, halloysite, and tetrasilicic mica. Hydrotalcite, which is a layered double hydroxide, is also useful.

Inorganic layered compounds other than the clay minerals are also useful in the invention. Examples of such compounds include, for example, metal oxides having a layer structure, such as titanates, niobates, manganates, phosphonates, tin oxide, cobalt oxide, copper oxide, iron oxide, nickel oxide, platinum oxide, ruthenium oxide, and rhodium oxide, and composite oxides composed of the elements recited above. Graphite is also useful.

The inorganic layered compound may be either natural or synthetic. The inorganic layered compounds described above may be used either individually or as a mixture thereof. Preferred of the above enumerated inorganic layered compounds are montmorillonite and tetrasilicic mica because of their particularly high barrier properties against water vapor or high oxygen barrier properties in a high humidity environment.

The inorganic layered compound is preferably negatively charged. When the inorganic layered compound is negatively charged, the membrane structure exhibits further improved gas barrier properties, particularly water vapor barrier properties or oxygen barrier properties in a high humidity environment. This is believed to be because, when a coating film containing the inorganic layered compound and the cellulose microfibers is dried to form a membrane structure according to the hereinafter described preferred process for making the membrane structure of the invention, the electrostatic repulsive force between the inorganic layered compound and the cellulose microfibers is maintained in the coating film so that the inorganic layered compound remains highly dispersed to achieve a highly dispersed composite. The amount of charge of the inorganic layered compound is preferably 1 to 1000 eq/g, more preferably 20 to 800 eq/g, even more preferably 100 to 500 eq/g, provided that the charge is negative. The amount of charge is measured as follows.

An inorganic layered compound is dispersed in ion-exchanged water in a concentration of 0.1 mass%. The volume of a cationic titration solution (0.001 N polydiallyldimethylammonium chloride, purchased from BTG Mutek) required to neutralize 10 g of the dispersion is determined using a particle charge detector (PCD 03, from Mutek), from which the amount of charge of the inorganic compound is calculated.

It is preferred for the inorganic layered compound to have high swellability in a solvent. In a membrane structure formed by using such a highly swellable, inorganic layered compound, the inorganic layered compound and the cellulose microfibers are not merely mixed up but are combined such that the cellulose microfibers penetrate between the layers of the inorganic layered compound to expand the spacing between the layers thereby to provide a nanoscale composite structure composed of the inorganic layered compound and the cellulose microfibers. This appears to be the reason the thus formed membrane structure exhibits high gas barrier properties, particularly barrier properties against water vapor or barrier properties against oxygen in a high humidity environment. The spacing between layers of an inorganic layered compound in a dry state generally depends on the ions existing between the layers. With the case of sodium ions, for instance, the spacing between the layers is as small as about less than 1 nm. When cellulose microfibers with an average fiber diameter, e.g., of 3 to 4 nm are used in the membrane structure, the fibers penetrate between the layers of the inorganic layered compound to expand the crystal lattice spacing, namely the spacing between layers, of the inorganic layered compound to 3 nm or more. In the membrane structure formed by using cellulose microfibers with an average fiber diameter of 3 to 4 nm, when the spacing between layers of the inorganic layered compound is preferably 3 nm or greater, more preferably 3 to 100 nm, even more preferably 3 to 10 nm, the membrane structure will exhibit high gas barrier properties. The spacing (distance) between layers of an inorganic layered compound is determined by X-ray diffractometry or by observing a cross section of the membrane structure under an electron microscope.

As previously stated, it is preferred to use an inorganic layered compound having accelerated delamination. The membrane structure of the invention containing an inorganic layered compound having accelerated delamination shows high gas barrier performance even in a severe environment, such as a high humidity atmosphere. This is considered to be because delamination of the inorganic layered compound provides a winding path for gas molecules permeating through the membrane structure. To accelerate delamination of the inorganic layered compound, it is advantageous to incorporate a basic substance into an aqueous dispersion as will be described later with respect to the method for preparing an aqueous dispersion.

The inorganic layered compound preferably has an average particle size of 0.01 to 10 $\mu$m, more preferably 0.1

to 6 μm, even more preferably 0.1 to 4 μm. The inorganic layered compound with its average particle size falling in that range shows good dispersibility in the membrane structure to ensure further improved gas barrier properties of the membrane structure. The average particle size is determined as follows: an inorganic layered compound is dispersed in ion exchanged water in a concentration of 0.05 mass%, and the particle size distribution is determined using a laser diffraction particle size analyzer (SALD0300V, supported by analysis software Wing SALD-300V, both from Shimadzu Corp.). The average particle size is defined to be the average of the measured particle size distribution. In this analysis, the refractive index of montmorillonite, mica, tetrasilicic mica, talc, saponite, and magnesium oxide is taken as 1.6, and that of a titanate is taken as 2.6.

The membrane structure of the invention is also characterized by the ratio of the cellulose microfibers to the inorganic layered compound. The ratio is one of the factors influential on the gas barrier performance of the membrane structure of the invention. From this viewpoint, the mass ratio of the inorganic layered compound to cellulose microfibers (inorganic layered compound/cellulose microfibers) is 0.01 to 100, preferably 0.01 to 10, more preferably 0.1 to 10, even more preferably 0.1 to 3. The membrane structure exhibits improved gas barrier properties while maintaining its transparency as long as the ratio falls within the range recited. When the mass ratio is from 0.1 to 3, particular improvement is observed in water vapor barrier properties and oxygen barrier properties. The mass ratio may be calculated from the amounts of the cellulose microfibers and the inorganic layered compound to be used in the preparation of an aqueous dispersion containing the cellulose microfibers and the inorganic layered compound. It may also be calculated from the results of thermogravimetry of the membrane structure. The thermogravimetry of the membrane structure and calculation to obtain the inorganic layered compound to cellulose microfibers mass ratio in the membrane structure are carried out as follows.

About 10 mg of a membrane structure is weighed accurately and analyzed on a thermogravimetry instrument (TG/DTA6300, from Seiko Instruments) to determine the weight loss in an air stream when heated from 30°C to 500°C at a rate of 40°C/min, maintained at 500°C for 30 minutes, and then cooled from 500° to 30°C at a rate of 40°C/min.

Under the heating conditions described, the cellulosic component completely bums whereas the inorganic layered compound is incombustible. Therefore, the content (mass%) of the inorganic layered compound in the membrane structure is given by $100w_0/w_1$, where $w_0$ is the weight before measurement, and $w_1$ is the weight after measurement; and the inorganic layered compound to cellulose microfibers mass ratio is calculated from the inorganic layered compound content.

If desired, the membrane structure may contain, in addition to the cellulose microfibers and the inorganic layered compound, known additives, such as fillers, colorants (e.g., pigments), UV absorbers, antistatics, water resistance agents (e.g., silane coupling agents), crosslinking agents (e.g., compounds having a reactive functional group, such as epoxy, isocyanate, or aldehyde), metal salts, colloidal silica, alumina sol, and titanium oxide. In particular, it is preferred for the membrane structure to contain a crosslinking agent.

A crosslinking agent is used to crosslink cellulose microfibers to one another. Examples of crosslinking agents useful for this purpose include dialdehyde compounds, such as glyoxal and glutaraldehyde, and water-soluble, polyvalent or monovalent metal salts, such as magnesium sulfate, magnesium chloride, calcium carbonate, calcium chloride, sodium chloride, potassium chloride, lithium chloride, sodium sulfate, copper sulfate, silver nitrate, zinc chloride, and aluminum sulfate. The membrane structure containing the crosslinking agent advantageously exhibits improved water vapor barrier properties and oxygen barrier properties. To further ensure the improving effect, it is preferred to use a dialdehyde compound or a water soluble salt of an alkaline earth metal as a crosslinking agent. The amount of the crosslinking agent to be added is preferably 0.1% to 200%, more preferably 1% to 50%, by mass based on the mass of the cellulose microfibers.

A process for making the membrane structure of the invention will then be described. The membrane structure of the invention is obtainable by applying an aqueous dispersion of the cellulose microfibers and the inorganic layered compound in a liquid medium to form a coating film and drying the coating film. In detail, the method of the invention for making the membrane structure includes the steps of (b) mixing the inorganic layered compound and a dispersion of the cellulose microfibers (hereinafter also referred to as a cellulose microfiber dispersion) to prepare an aqueous dispersion and (c) forming a coating film of the aqueous dispersion and drying the coating film. The method of the invention may further include the step of (a) dispersing the inorganic layered compound in a liquid medium before the step (b).

The cellulose microfiber dispersion that is used in the step (b) may be, for example, the dispersion as obtained in the process of making cellulose microfibers described above. A dispersion prepared by dispersing the powdered cellulose microfibers obtained by the above-described process of producing the cellulose microfibers in a liquid medium may also be used. Water is a preferred liquid medium. Mixtures of water and a water-soluble organic solvent, including alcohols, ethers, and ketones, are also useful. The concentration of the cellulose microfibers in the cellulose microfiber dispersion is adjusted appropriately so that the concentration of the cellulose microfibers in the resulting aqueous dispersion may fall within the range hereinafter recited.

The step (b) may be carried out by adding the inorganic layered compound in its dry state to the cellulose microfiber dispersion or vice versa. As stated above, the step (b) may be preceded by the step (a). That is, the inorganic layered compound in a dry state is dispersed in a liquid medium to make a dispersion, which is then mixed with the cellulose microfiber dispersion. To conduct the step (a) prior to the step (b) is advantageous in that the inorganic layered compound and the cellulose microfibers are dispersed more uniformly in the aqueous dispersion than in the case where the step (a) is not carried out. The liquid medium for dispersing the inorganic layered compound may be selected from those usable to disperse the cellulose microfibers. The liquid medium for dispersing the inorganic layered compound and that for dispersing the cellulose microfibers may be the same or different. The concentration of the inorganic layered compound dispersion is adjusted appropriately so that the concentration of the inorganic layered compound in the resulting aqueous dispersion may be in the range hereinafter recited.

Water is a preferred liquid medium for use in the aqueous dispersion. Mixtures of water and a water-soluble organic solvent, including alcohols, ethers, and ketones, are also useful. The concentration of the cellulose microfibers in the dispersion is preferably 0.1% to 50%, more preferably 0.5 to 10%, by mass. The concentration of the inorganic layered compound in the dispersion is preferably 0.1% to 50%, more preferably 0.1 to 10%, by mass. With their concentrations being in the respective ranges recited, the dispersion will have a suitable viscosity to be applied. The viscosity of the dispersion is preferably, for example, 10 to 5000 mPa·s at 25°C.

It is preferred for the aqueous dispersion to contain a basic substance. Addition of a basic substance aims to further increase the gas barrier properties particularly in a high humidity environment. Specifically, the presence of a basic substance in the aqueous dispersion accelerates delamination of the inorganic layered compound as previously discussed. As a result, the membrane structure prepared from this aqueous dispersion provides a maze of paths for gas molecules thereby to establish a more effective barrier against passage of gas.

A substance that shows an alkaline pH as dissolved in water is used as the basic substance. For example, an inorganic base or a salt may be used. Examples of the inorganic base include alkali metal hydroxides, such as sodium hydroxide and potassium hydroxide; alkaline earth metal hydroxides, such as magnesium hydroxide; and ammonia. The salt is exemplified by a substance that dissolves in water to undergo hydrolysis to show alkalinity, such as sodium carbonate or sodium hydrogencarbonate.

Of the above described basic substances those having volatility are particularly preferred because, if a basic substance remains in a membrane structure prepared from the aqueous dispersion, it can decompose the cellulose fibers to cause coloration of the membrane structure. When the basic substance is volatile, the amount of the basic substance remaining in the membrane structure will decrease. A volatile basic substance is exemplified by ammonia.

The concentration of the basic substance in the aqueous dispersion is preferably 0.1% to 100%, more preferably 0.1% to 50%, by mass. Provided that the basic substance concentration in the aqueous dispersion is in that range, the mass ratio of the basic substance to the inorganic layered compound (basic substance/inorganic layered compound) is preferably 0.001 to 10, more preferably 0.001 to 1. When the basic substance is used in that amount, delamination of the inorganic layered compound is accelerated sufficiently. The basic substance added renders the dispersion alkaline. The basic substance is preferably added in such an amount as to result in a dispersion's pH of 7 to 14, more preferably 8 to 13, so that the membrane structure prepared from the dispersion will have further improved gas barrier properties.

When the aqueous dispersion contains a basic substance, the aqueous dispersion is advantageously prepared by mixing an aqueous dispersion containing the inorganic layered compound and the basic substance with cellulose microfibers having a carboxyl content of 0.1 to 3 mmol/g. This manner of incorporating a basic substance will be referred to as a pre-addition method. When the pre-addition method is followed, the inorganic layered compound, the basic substance, and a liquid medium are mixed to prepare a mother liquid, which is then mixed with the cellulose microfibers to give a desired dispersion. The cellulose microfibers may be mixed with the mother liquid in the form of powder or as dispersed in an aqueous liquid. Mixing may be achieved either by adding the cellulose microfibers to the mother liquid or by adding the mother liquid to the cellulose microfibers.

Alternatively, the aqueous dispersion containing a basic substance may be prepared by mixing an aqueous dispersion containing the inorganic layered compound and the cellulose microfibers having a carboxyl content of 0.1 to 3 mmol/g with the basic substance. This manner of incorporating a basic substance will be referred to as an after-addition method. In the after-addition method, the inorganic layered compound, the cellulose microfibers, and a liquid medium are mixed to prepare a mother liquid, which is then mixed with the basic substance to obtain a desired dispersion. The basic substance may be mixed with the mother liquid either as such or as dissolved in an aqueous medium. Mixing may be achieved either by adding the basic substance to the mother liquid or by adding the mother liquid to the basic substance.

In addition to the components described, the aqueous dispersion may further contain known additives, such as fillers, colorants (e.g., pigments), UV absorbers, antistatics, water resistance agents (e.g., silane coupling agents), crosslinking agents (e.g., compounds having a reactive functional group, such as epoxy, isocyanate, or aldehyde), metal salts, colloidal silica, alumina sol, and titanium oxide, if desired.

In the step (c), the resulting aqueous dispersion is applied by casting onto a smooth surface of a substrate, such as a glass plate or a plastic film. The aqueous dispersion may be applied otherwise, for example by spraying or dipping. The coating film thus formed is dried spontaneously or by heating to form a desired membrane structure. Drying by heating results in improvement in gas barrier properties, particularly oxygen barrier properties in a high humidity environment, compared with spontaneous drying. Drying by heating is preferably carried out at a temperature of 40° to 300°C, more preferably 90° to 200°C. Useful heating means include an electric drying oven (natural convection type or forced convection type), a hot air circulation type drying oven, a drying oven utilizing far infrared heating combined with hot air circulation, and a vacuum drying oven that accomplishes drying under reduced pressure. The heating time is decided as appropriate to the state of the coating film.

The inorganic layered compound in the inorganic layered compound dispersion obtained in the step (a) or in the aqueous dispersion of the inorganic layered compound and the cellulose microfibers obtained in the step (b) generally exist as a mixture of various size particles from fine to coarse. Coarse particles can impair the transparency, gas barrier properties, strength, and adhesion (to a substrate) of the membrane structure. Then, a treatment for separating coarse particles of the inorganic layered compound may be performed in the step (a) or (b) to produce a membrane structure with improvements in transparency, gas barrier properties, strength, and adhesion to a substrate.

The treatment for separating coarse particles of the inorganic layered compound is conducted after the preparation of the dispersion of the inorganic layered compound in the step (a) or after the preparation of the aqueous dispersion of the cellulose microfibers and the inorganic layered compound in the step (b).

The separation treatment may be carried out by, for example, filtration or centrifugation. By the separation treatment, coarse particles, preferably those with a particle size of 10 μm or greater, are removed.

In the filtration treatment, the dispersion of the inorganic layered compound or the aqueous dispersion of the inorganic layered compound and the cellulose microfibers is filtered through a filter having a prescribed pore size to separate coarse particles of the inorganic layered compound. When the filtration is conducted in the step (a), the filtrate free from coarse particles is collected and mixed with a dispersion of the cellulose microfibers in the step (b) to prepare an aqueous dispersion, which is then subjected to the step (c) to make a membrane structure. When the filtration is conducted in the step (b), the filtrate free from coarse particles is collected, which is then subjected to the step (c) to make a membrane structure. The filtration may be effected by vacuum, gravity, or pressure filtration.

In the centrifugation treatment, coarse particles of the inorganic layered compound are separated from the dispersion of the inorganic layered compound or the aqueous dispersion of the inorganic layered compound and the cellulose microfibers by making use of the difference in specific gravity (or mass) between particles. When the centrifugation is conducted in the step (a), a coarse particle-free portion of the inorganic layered compound dispersion is collected and mixed with a dispersion of the cellulose microfibers in the step (b) to prepare an aqueous dispersion, which is then subjected to the step (c) to make a membrane structure. When the centrifugation is conducted in the step (b), a coarse particle-free portion of the aqueous dispersion is collected, which is then subjected to the step (c) to make a membrane structure. The centrifugation is performed using any known apparatus. The centrifugation is carried out preferably at 3000 to 20000 G, more preferably 10000 to 15000 G, for a period of 1 to 30 minutes, more preferably 5 to 15 minutes.

In the method of the invention, the aforementioned crosslinking agent may be present in the dispersion of the inorganic layered compound obtained in the step (a) or the aqueous dispersion of the inorganic layered compound and the cellulose microfibers obtained in the step (b), so that the membrane structure obtained will contain the crosslinking agent. Alternatively, a crosslinking agent may be incorporated into a membrane structure by applying a crosslinking agent to a coating film formed of the aqueous dispersion in the step (c) and drying the coating film. In this case, the aqueous dispersion of the inorganic layered compound and the cellulose microfibers does not have to, but may optionally contain the crosslinking agent. The manner of applying a crosslinking agent is not particularly limited and may be selected as appropriate according to the properties of the crosslinking agent. For example, a liquid crosslinking agent may be applied by spraying, coating, casting, or dipping techniques. A liquid crosslinking agent may be diluted with water or an organic solvent, and the resulting dilution with an adjusted concentration may be applied to the coating film. A solid crosslinking agent may be dissolved in a solvent capable of dissolving the crosslinking agent, and the resulting solution may be applied to the coating film. For example, a solid, water-soluble salt as a crosslinking agent may be applied to the coating film as dissolved in water. The amount of the crosslinking agent to be used is decided so as to result in the above recited content of the crosslinking agent in the membrane structure produced.

The membrane structure as formed upon drying the coating film may be supplied for use as it is supported by the substrate or after peeled from the substrate. In the latter case, the membrane structure may be used as such or as overlaid on another substrate. The membrane structure exhibits high barrier properties against various gases, such as oxygen, water vapor, nitrogen, and carbon dioxide, all of which are present in the air. Specifically, the membrane structure has a low water vapor transmission rate of 5 to 24 g/($m^2$·day), preferably 5 to 22 g/($m^2$·day). The oxygen transmission rate of the membrane structure is preferably as low as $0.01 \times 10^{-5}$ to $20 \times 10^{-5}$ $cm^3$/($m^2$·day·Pa), more preferably $0.01 \times 10^{-5}$ to $5 \times 10^{-5}$ $cm^3$/($m^2$·day·Pa), at 50% RH and preferably $0.01 \times 10^{-5}$ to $100 \times 10^{-5}$ $cm^3$/($m^2$·day·Pa), more preferably $0.01 \times 10^{-5}$ to $50 \times 10^{-5}$ $cm^3$/($m^2$·day·Pa), at 70% RH. The membrane structure may have barrier properties against a plurality of gases, such as water vapor and oxygen, or may have barrier properties against a specific gas. For example, the membrane structure having water vapor barrier properties but no oxygen barrier properties will be used as a barrier material selectively inhibiting the permeation of water vapor. The target gas is chosen as appropriate to the intended use of the membrane structure. The water vapor transmission rate and the oxygen transmission rate are determined by the following methods.

(1) Water vapor transmission rate (g/($m^2$·day))

Water vapor transmission rate is measured in an environment of 40°C and 90% RH in accordance with JIS Z0208, the dish method.

(2) Oxygen transmission rate ($cm^3$/($m^2$·day·Pa))

Oxygen transmission rate is measured using an oxygen transmission rate tester OX-TRAN2/21, model ML&SL, from Hitachi High-Technologies Inc. in accordance with JIS K7126-2 (Appendix A: equal pressure method). The measuring conditions were 23°C or 30°C and 0% RH, 50% RH, or 70% RH. For example, "oxygen transmission rate at 23°C and 50% RH" means an oxygen transmission rate measured in an environment consisting of oxygen gas of 23°C and 50% RH and nitrogen gas (carrier gas) at 23°C and 50% RH. The membrane structure to be tested is conditioned in an environment of 23°C and 50% RH for at least 24 hours before the test.

The membrane structure of the invention has good transparency. The transparency of the membrane structure is evaluated in terms of, for example, a haze (%). The haze of the membrane structure is measured with a hazemeter NDH-5000 from Nippon Denshoku Industries Co., Ltd. in accordance with JIS K7136.

The membrane structure of the invention is suitably used in applications, such as a packaging material for packaging foods, cosmetics, medical instruments, machinery parts, and clothing, with its high gas barrier properties taken advantage of.

Examples

The invention will now be shown in detail with reference to Examples. It should be understood, nevertheless, that the scope of the invention is not limited thereto. Unless otherwise noted, all the percents are by mass.

Example 1

(1) Preparation of cellulose microfibers

Materials used were (1) softwood bleached kraft pulp Mackenzie, from Fletcher Challenge Canada Ltd. (CSF: 650 ml) as natural fiber, (2) a commercial product of TEMPO available from Aldrich (free radical: 98%), (3) a commercially product of sodium hypochlorite available from Wako Pure Chemical Industries, Ltd. (Cl: 5%), and (4) a commercial product of sodium bromide available from Wako Pure Chemical Industries, Ltd.

Softwood bleached kraft pulp fiber weighing 100 g was stirred thoroughly in 9900 g of ion exchanged water. To the suspension were added 1.25% of TEMPO, 12.5% of sodium bromide, and 28.4% of sodium hypochlorite in that order, each relative to 100 g of the mass of the pulp. The pulp was oxidized while keeping the pH of the system at 10.5 by dropping 0.5 M sodium hydroxide using a pH-stat. After 120 minutes reacting, dropping was stopped to provide oxidized pulp. The oxidized pulp was sufficiently washed with ion exchanged water and dewatered. A 3.9 g portion of the oxidized pulp and 296.1 g of ion-exchanged water were stirred in a mixer (Vita-Mix blender ABSOLUTE, available from Osaka Chemical Co., Ltd.) for 120 minutes to achieve microfibrillation to provide a dispersion of cellulose microfibers. The solid concentration of the dispersion was 1.3%. The cellulose microfibers had an average diameter of 3.1 nm, an average aspect ratio of 240, and a carboxyl content of 1.2 mmol/g.

(2) Fabrication of membrane structure

Montmorillonite (Kunipia F, from Kunimine Industries, Co., Ltd.) was mixed with ion-exchanged water and stirred with a magnetic stirrer for 24 hours to prepare a 2.2% montmorillonite dispersion. A 8.9 g portion of the montmorillonite dispersion and 15 g of the dispersion of the cellulose microfibers (solid concentration: 1.3%) were mixed and stirred using a magnetic stirrer for 24 hours to obtain an aqueous dispersion having a solids concentration of 1.6%. The resulting dispersion was applied to a 25 μm thick polyethylene terephthalate film using a bar coater to a wet thickness of 100 μm. The coating film was dried at room temperature for 2 hours and then by heating at 150°C for 30 minutes in an electric drying oven of natural convection type to form a membrane structure. The oxygen transmission rate (OTR) (at 23°C and 0%, 50%, and 70% RH) and the water vapor transmission rate (WVTR) (JIS Z0208) of the resulting membrane structure were determined. The results are shown in Table 1 below. The transparency of the membrane structure was determined by the method described above. The results obtained are shown in Table 3 below.

Examples 2 and 3

A membrane structure was obtained in the same manner as in Example 1, except for using, as montmorillonite, a commercial product Ben-Gel FW (product name) in Example 2 or Ben-Gel A (product name) in Example 3, both from Hojun Co., Ltd.

The OTR (at 50% RH) and the WVTR of the resulting membrane structure were determined. The results are shown in Table 2 below.

Examples 4 and 5

A membrane structure was obtained in the same manner as in Example 1, except for replacing montmorillonite with a commercial product of mica Somasif ME-100 (product name) in Example 4 or Micromica (product name) in Example 5, both from Co-op Chemical Co., Ltd.

The resulting membrane structures were evaluated in the same manner as in Example 2. The results are shown in Table 2.

Example 6

A membrane structure was obtained in the same manner as in Example 1, except for replacing montmorillonite with talc SG2000 (product name) from Toshin Chemicals Co., Ltd. The resulting membrane structure was evaluated in the same manner as in Example 2. The results are shown in Table 2.

Examples 7 and 8

A membrane structure was obtained in the same manner as in Example 1, except for replacing montmorillonite with a commercial product of synthetic saponite Smectron SA (product name) from Kunimine Industries, Co., Ltd. in Example 7 or synthetic saponite from Kunimine Industries, Co., Ltd. in Example 8.

The resulting membrane structures were evaluated in the same manner as in Example 2. The results are shown in Table 2.

Example 9

A membrane structure was obtained in the same manner as in Example 1, except for replacing montmorillonite with a layered titanate Terracess (product name) from Otsuka Chemical Co., Ltd. The resulting membrane structure was evaluated in the same manner as in Example 2. The results are shown in Table 2.

Example 10

A membrane structure was obtained in the same manner as in Example 1, except for replacing montmorillonite with tetrasilicic mica NTS-5 (product name) from Topy Industries, Ltd. The resulting membrane structure was evaluated in the same manner as in Example 1. The results are shown in Table 1.

Example 11

A membrane structure was obtained in the same manner as in Example 1, except for reducing the amount of the montmorillonite aqueous dispersion from 8.9 g to 2.2 g. The resulting membrane structure was evaluated in the same manner as in Example 1, except that the OTR at 0% RH was not determined. The results are shown in Table 3.

Example 12

A membrane structure was obtained in the same manner as in Example 1, except for reducing the amount of the montmorillonite aqueous dispersion from 8.9 g to 4.5 g. The resulting membrane structure was evaluated in the same manner as in Example 11. The results are shown in Table 3.

Example 13

A membrane structure was obtained in the same manner as in Example 1, except for increasing the amount of the montmorillonite aqueous dispersion from 8.9 g to 17.8 g. The resulting membrane structure was evaluated in the same manner as in Example 11. The results are shown in Table 3.

Example 14

A membrane structure was obtained in the same manner as in Example 1, except for increasing the amount of the montmorillonite aqueous dispersion from 8.9 g to 35.6 g. The resulting membrane structure was evaluated in the same manner as in Example 11. The results are shown in Table 3.

Examples 15 to 18

A membrane structure was obtained in the same manner as in Example 1, except for increasing the amount of the dispersion of the cellulose microfibers from 15 g to 50 g and replacing 8.9 g of the montmorillonite aqueous dispersion with 1.1 g (in Example 15), 2.2 g (in Example 16), 10.8 g (in Example 17), or 21.7 g (in Example 18) of a 6% tetrasilicic mica aqueous dispersion NTS-5 (product name) from Topy Industries, Ltd.. The resulting membrane structure was evaluated in the same manner as in Example 11. The results are shown in Table 3.

Comparative Example 1

A dispersion of cellulose microfibers (solid concentration: 1.3%) was obtained in the same manner as in Example 1. The dispersion was applied to a 25 μm thick polyethylene terephthalate film using a bar coater to a wet thickness of 100 μm. The coating film was dried at room temperature for 2 hours and then by heating at 150°C for 30 minutes in an electric drying oven of natural convection type to form a membrane structure. The OTR (at 23°C and 0%, 50%, and 70% RH) and the WVTR of the resulting membrane structure were determined. The results are shown in Table 1.

Comparative Example 2

A membrane structure was obtained in the same manner as in Example 1, except for replacing the montmorillonite with magnesium oxide powder (from Wako Pure Chemical). The resulting membrane structure was evaluated in the same manner as in Example 2. The results obtained are shown in Table 2.

Table 1

| | | | Example 1 | Example 10 | Comp. Example 1 |
|---|---|---|---|---|---|
| Aqueous dispersion | Inorganic Layered Compound | Kind | montmorilonite | tetrasilicic mica | - |
| | | Average Particle Size (μm) | 0.66 | 2.3 | - |
| | | Amount of Charge (eq/g) | 353 | 354 | - |
| | Solids Concentration (%) | | 1.6 | 1.6 | 1.3 |
| | Mass Ratio (Inorganic Layered Compound/Cellulose Fibers ) | | 1 | 1 | 0 |
| Membrane | WVTR ($g/(m^2 \cdot day)$) | | 18.6 | 17.4 | 24.1 |
| | OTR at 23°C 0% RH ($\times 10^{-5}$ $cm^3/(m^2 \cdot day \cdot Pa)$) | | 0.04 | 0.04 | 0.05 |
| | OTR at 23°C 50% RH ($\times 10^{-5}$ $cm^3/(m^2 \cdot day \cdot Pa)$) | | 0.4 | 0.4 | 5.4 |
| | OTR at 23°C 70% RH ($\times 10^{-5}$ $cm^3/(m^2 \cdot day \cdot Pa)$) | | 4.1 | 1.0 | 38 |

Table 1 shows the WVTR and the OTR at various humidity conditions of the membrane structures. As is apparent from the results in Table 1, the membrane structures of cellulose microfibers containing the inorganic layered compound (Examples 1 and 10) are superior in water vapor barrier properties to the membrane structure of Comparative Example 1 containing no inorganic layered compound and also exhibit high oxygen barrier properties under humidity conditions of 0% to 70% RH.

Table 2

| | | | Example | | | | | | | | | | Comp. Example | |
|---|---|---|---|---|---|---|---|---|---|---|---|---|---|---|
| | | | 1 | 2 | 3 | 4 | 5 | 6 | 7 | 8 | 9 | 10 | 1 | 2 |
| Aqueous dispersion | Inorganic Layered Compound | Kind | montmorrilonite | do. | do. | mica | do. | talc | synthetic saponite | do. | titanate | tetrasilicic mica | - | magnesium oxide |
| | | Average Particle Size (μm) | 0.66 | 0.45 | 0.53 | 4.6 | 2.5 | 0.43 | 7.5 | 2.2 | 5.3 | 2.3 | 0 | 2 |
| | | Amount of Charge (eq/g) | 353 | 198 | 170 | 53 | 7 | 6 | 580 | 631 | 28 | 354 | 0 | 0 |
| | Solid Concentration (%) | | 1.6 | 1.6 | 1.6 | 1.6 | 1.6 | 1.6 | 1.6 | 1.6 | 1.6 | 1.6 | 1.3 | 1.6 |
| | Mass Ratio (Inorganic Layered Compound/ Cellulose Fibers) | | 1 | 1 | 1 | 1 | 1 | 1 | 1 | 1 | 1 | 1 | 0 | 1 |
| Membrane | WVTR ($g/(m^2 \cdot day)$) | | 18.6 | 21.9 | 21.4 | 21.3 | 23.0 | 23.6 | 22.4 | 22.2 | 22.4 | 17.4 | 24.1 | 24.3 |
| | OTR at 23°C 50% RH ($\times 10^{-5}$ $cm^3/(m^2 \cdot day \cdot Pa)$) | | 0.4 | 2.0 | 1.3 | 7.6 | 9.1 | 10.1 | 5.1 | 4.3 | 8.4 | 0.4 | 5.4 | 14.2 |

Table 2 shows the influences of the kind, amount of charge, and average particle size of the inorganic layered compounds. As is apparent from the results in Table 2, the membrane structures formed of the cellulose microfibers containing the inorganic layered compound (Examples 1 to 10) are superior to the membrane structure of Comparative Example 1 in water vapor barrier properties. In particular, the membrane structures of Examples 1, 2, 3, and 10, in which the inorganic layered compound has an average particle size of 0.1 to 4 μm and a negative charge quantity of 100 to 500 eq/g, exhibit a marked improvement in oxygen barrier performance. The membrane structure of Comparative Example 2 shows no improvement in gas barrier properties probably because the inorganic compound used, which is not a layered compound and has no negative charge, is not dispersed sufficiently for achieving a highly dispersed composite.

Table 3

| | | Example | | | | | | | | | Comp. Example 1 |
|---|---|---|---|---|---|---|---|---|---|---|---|
| | | 1 | 11 | 12 | 13 | 14 | 15 | 16 | 17 | 18 | |
| Aqueous Dispersion | Solids Concentration (%) | 1.6 | 1.4 | 1.5 | 1.8 | 1.9 | 1.4 | 1.5 | 2.1 | 2.7 | 1.3 |
| | Inorganic Layered Compound | montmorillonite | do. | do. | do. | do. | tetrasilicic mica | do. | do. | do. | - |
| | Mass Ratio (Inorganic Layered Compound/Cellulose Fiber) | 1 | 0.25 | 0.5 | 2 | 8 | 0.1 | 0.2 | 1 | 2 | 0 |
| Membrane | WVTR (g/(m$^2$·day)) | 18.6 | 19.4 | 18.7 | 17.9 | 19.0 | 18.1 | 16.7 | 16.8 | 17.3 | 24.1 |
| | OTR at 23°C 50% RH ($\times10^{-5}$ cm$^3$/(m$^2$·day·Pa)) | 0.40 | 0.57 | 0.50 | 0.56 | 3.3 | 0.34 | 0.25 | 0.19 | 0.16 | 5.4 |
| | OTR at 23°C 70% RH ($\times10^{-5}$ cm$^3$/(m$^2$·day·Pa)) | 4.1 | 9.4 | 7.2 | 5.3 | 10.5 | 2.5 | 1.5 | 1.0 | 2.9 | 38.1 |
| | Haze (%) | 13.3 | 5.6 | 8.8 | 20.0 | 42.6 | 5.8 | 13.6 | 19.6 | 25.2 | 3.3 |

As shown in Table 3, the mass ratio of the inorganic layered compound to the cellulose fibers (Inorganic Layered Compound/Cellulose Fibers) varies among Examples 1 and 11 to 18. As can be seen from the results in Table 3, each of the membrane structures of Examples 1 and 11 to 18 is superior to the membrane structure of Comparative Example 1 in both water vapor barrier properties and oxygen barrier properties. In particular, remarkable improvements in gas barrier properties are observed in Examples 1, 11 to 13, and 15 to 18, in which the mass ratio of the inorganic layered compound to the cellulose fibers is in the range of from 0.1 to 3.

Example 19

A coating film was formed in the same manner as in Example 17 using the same aqueous dispersion as used in Example 17. A 5% glyoxal aqueous solution (from Wako Pure Chemical) as a crosslinking agent was sprayed to the coating film while wet (within 1 minute from the application) using a commercially available atomizer to give a 10% glyoxal content relative to the mass of the cellulose microfibers in the film. The coating film was dried at room temperature for 2 hours and then by heating in an electric drying oven of natural convection type at 150°C for 30 minutes to obtain a membrane structure. The resulting membrane structure was evaluated for the properties shown in Table 4 below.

Example 20

A membrane structure was obtained in the same manner as in Example 19, except for using a 0.5 M magnesium sulfate aqueous solution as a crosslinking agent to give a 12% magnesium sulfate content relative to the mass of the cellulose microfibers in the coating film. The resulting membrane structure was evaluated in the same manner as in Example 19. The results are shown in Table 4.

Comparative Example 3

A coating film was formed in the same manner as in Comparative Example 1. While the coating film was wet (within 1 minutes from the application), 5% glyoxal was sprayed thereon as a crosslinking agent to give a 10% glyoxal content relative to the mass of the cellulose microfibers in the film. The coating film was dried under the same conditions as in Example 19 to give a membrane structure. The membrane structure was evaluated in the same manner as in Example 19. The results are shown in Table 4.

Comparative Example 4

A membrane structure was obtained in the same manner as in Comparative Example 3, except for using a 0.5 M magnesium sulfate aqueous solution as a crosslinking agent to give a 12% magnesium sulfate content relative to the mass of the cellulose microfibers in the coating film. The resulting membrane structure was evaluated in the same manner as in Example 19. The results are shown in Table 4.

Table 4

| | | Example | | Comp. Example | |
|---|---|---|---|---|---|
| | | 19 | 20 | 3 | 4 |
| Aqueous Dispersion | Solids Concentration (%) | 2.1 | 2.1 | 1.3 | 1.3 |
| | Mass Ratio (Inorganic Layered Compound/Cellulose Fibers) | 1 | 1 | 0 | 0 |
| Crosslinking Agent | Kind | glyoxal | magnesium sulfate | glyoxal | magnesium sulfate |
| | Manner of Addition | spray | spray | spray | spray |
| | Amount (% wrt cellulose fibers) | 10 | 12 | 10 | 12 |
| Membrane | WVTR ($g/(m^2 \cdot day)$) | 9.2 | 13.1 | 21.0 | 18.0 |
| | OTR at 23°C 50% RH ($\times 10^{-5}$ $cm^3/(m^2 \cdot day \cdot Pa)$) | 0.16 | 0.04 | 0.67 | 0.79 |
| | OTR at 23°C 70% RH ($\times 10^{-5}$ $cm^3/(m^2 \cdot day \cdot Pa)$) | 1.2 | 0.5 | 40.6 | 44.5 |

The membrane structures of Examples 19 and 20 are composed of cellulose microfibers, an inorganic layered compound, and a crosslinking agent. Compared with those of Comparative Examples 3 and 4 containing no inorganic layered compound, they are excellent in both water vapor properties and oxygen barrier properties. In particular, the oxygen transmission rate at 23°C and 70% RH of the membrane structure of Example 20 is about half that of the membrane structure of Example 17 containing no crosslinking agent, proving that the use of a crosslinking agent makes a large improvement on gas barrier properties.

Example 21

The cellulose microfiber dispersion (solid concentration: 1.3%) used in Example 1 was diluted with ion exchanged water to a solid concentration of 1.0%. A 50 g portion of the diluted dispersion and 0.8 g of a 6% tetrasilicic mica dispersion (NTS-5, from Topy Industries, Ltd.) were mixed and stirred using a magnetic stirrer for 24 hours to prepare an aqueous dispersion. The solids concentration and the mass ratio of the dispersion were as shown in Table 5 below. A membrane structure was fabricated in the same manner as in Example 1, except for using the thus prepared aqueous dispersion. The resulting membrane structure was evaluated for the properties shown in Table 5.

Examples 22 to 24

The same aqueous dispersion as used in Example 21 was filtered under reduced pressure using a glass filter (VIDEC 11G-2; pore size: 40 to 50 μm) in Example 22, filter paper (Whatman No. 41; pore size: 20 to 25 μm) in Example 23, or a glass filter (3GP16, from Shibata Scientific Technology, Ltd.; pore size: 10 to 16 μm) in Example 24 to separate coarse particles of the inorganic layered compound from the aqueous dispersion to collect filtrate.

The solids content of each filtrate is shown in Table 5. A membrane structure was obtained in the same manner as in Example 1, except for using the resulting filtrate. The membrane structure was evaluated for the properties shown in Table 5. The mass ratio of the inorganic layered compound to the cellulose microfibers was determined by subjecting a membrane structure prepared by pouring the filtrate in a petri dish, followed by drying in vacuo to thermogravimetry as discussed above.

Examples 26 to 28

A 6% dispersion of tetrasilicic mice (NTS-5, from Topy Industries, Ltd.) weighing 45 g was put in a conical tube and subjected to centrifugation in a centrifuge (general purpose refrigerated centrifuge 5922, from Kubota Corp.) at 10,000 rpm for 10 minutes. As a result, the tetrasilicic mica separated into four layers in the conical tube. Each of the first to third layers from the top was collected with a dropper. The solid (tetrasilicic mica) concentrations of the first to third layers were 0.5%, 3.1%, and 8.2%, respectively.

To 50 g of the cellulose microfiber dispersion used in Example 21 (solid concentration: 1.0%) was added 10 g of the first layer, 1.6 g of the second layer, or 0.6 g of the third layer, of the thus collected tetrasilicic mica, followed by stirring well to prepare an aqueous dispersion. A membrane structure was obtained in the same manner as in Example 21, except for using each of the resulting aqueous dispersions. The resulting membrane structures were evaluated for the properties shown in Table 5.

Example 29

In a conical tube was put 45 g of the aqueous dispersion used in Example 21 (cellulose microfibers/tetrasilicic mica) and centrifuged in a general purpose refrigerated centrifuge (5922, from Kubota Corp.) at 10,000 rpm for 10 minutes. As a result, the aqueous dispersion separated into two layers in the conical tube. The first (top) layer was collected with a dropper. The solids concentrations of the first layer of the aqueous dispersion was 1.1%. A membrane structure was obtained in the same manner as in Example 21, except for using the collected first layer of the aqueous dispersion. The membrane structure was evaluated for the properties shown in Table 5. The mass ratio of the inorganic layered compound to the cellulose microfibers was determined in the same manner as in Examples 22 to 24.

Comparative Example 5

A membrane structure was obtained in the same manner as in Example 21, except for using only the cellulose microfiber dispersion used in Example 21 (solid concentration: 1.0%) as a material of preparation and drying the coating film at 150°C for 30 minutes. The resulting membrane structure was evaluated for the properties shown in Table 5.

Table 5

| | | Example 21 | Example 22 | Example 23 | Example 24 | Example 26 | Example 27 | Example 28 | Example 29 | Comp. Example 5 |
|---|---|---|---|---|---|---|---|---|---|---|
| Method of Separation | | - | filtration (pore size: 40-50 μm) | filtration (pore size: 20-25 μm) | filtration (pore size: 10-16 μm) | centrifugation (1st layer) | centrifugation (2nd layer) | centrifugation (3rd layer) | Centrifugation (1st layer) | - |
| Aqueous Dispersion | Solids Concentration (%) | 1.1 | 1.1 | 1.0 | 1.0 | 0.9 | 1.1 | 1.1 | 1.1 | 1.3 |
| | Mass Ratio (Inorganic Layered Compound/Cellulose Fibers) | 0.1 | 0.2 | 0.2 | 0.2 | 0.1 | 0.1 | 0.1 | 0.1 | 0 |
| Membrane | Heating Treatment (°C × min) | 120×30 | 120×30 | 120×30 | 120×30 | 120×30 | 120×30 | 120×30 | 120×30 | 150×30 |
| | OTR at 30°C 40% RH ($\times 10^{-5}$ $cm^3/(m^2 \cdot day \cdot Pa)$) | 0.4 | 0.2 | 0.2 | 0.5 | 0.2 | 0.03 | 0.07 | 0.2 | 7.9 |
| | OTR at 30°C 70% RH ($\times 10^{-5}$ $cm^3/(m^2 \cdot day \cdot Pa)$) | 8.2 | 8.7 | 6.0 | 30 | 6.2 | 1.2 | 2.7 | 4.7 | 43 |
| | Haze (%) | 5.8 | 6.1 | 5.6 | 4.1 | 3.8 | 3.8 | 6.0 | 4.8 | 3.3 |

The membrane structures of Examples 22 to 24 were produced from the aqueous dispersion after removal of coarse particles by filtration. The membrane structures of Examples 26 to 29 were produced from the aqueous dispersion after removal of coarse particles by centrifugation. It is seen that these membrane structures exhibit improved oxygen barrier properties as compared with the membrane structure of Example 21, in which the operation of separating coarse particles was not carried out. This is considered attributed to the removal of coarse particles by filtration or centrifugation. Of Examples where coarse particles were removed by filtration, the membrane structure of Example 23 exhibits particularly improved oxygen barrier properties. This means that it is important to select a pore size that achieves efficient separation of coarse particles. It is seen that, on the other hand, of Examples where centrifugal separation was conducted, the membrane structures of Examples 26 and 27 achieve improvements on not only oxygen barrier properties but also transparency.

Apart from the above evaluations, a cross-section each of the membrane structures of Examples 15 and 17 and Comparative Example 1 was imaged using a transmission electron microscope. The resulting micrographs are shown in Figs. 1 through 3. The black portions are an inorganic layered compound, and the gray portions are cellulose fibers. In the membrane structures of Examples 15 and 17 shown in Figs. 1 and 2, respectively, it is confirmed that a sheet material with a thickness of 1 nm or smaller is dispersed in the membrane of cellulose microfibers. There are seen a plurality of portions where the distance between the adjacent layers of the sheet material is larger than the fiber diameter (3.1 nm) of the cellulose microfibers. It is thus confirmed that the cellulose microfibers penetrate between the layers of the inorganic layered compound to such an extent as to expand the spacing between the layers to provide a nanoscale composite composed of the inorganic layered compound and the cellulose microfibers. In particular, a number of portions in which the spacing between the layers has expanded to 3 to 10 nm are observed in Example 17. In contrast, the membrane structure of Comparative Example 1 does not have such a structure as appearing in Figs. 1 or 2.

Example 30

(1) Preparation of cellulose microfibers

Cellulose microfibers were prepared in the same manner as in Example 1.

(2) Preparation of aqueous dispersion

The resulting cellulose microfibers dispersion weighing 100 g and 10.8 g of a tetrasilicic mica aqueous dispersion (NTS-5, from Topy Industries) were mixed and stirred in a homo-mixer (from Tokushu Kika Kogyo K.K.) at 1000 rpm for 2 minutes to make a mother liquid. The mother liquid (110.8 g) and 3.25 g of a 2% sodium hydroxide aqueous solution were mixed and stirred using a magnetic stirrer for 24 hours to prepare an aqueous dispersion. The composition and physical properties of the dispersion are shown in Table 6 below.

The dispersion was applied to a 25 μm thick polyethylene terephthalate film with a bar coater to a wet thickness of 100 μm. The coating film was dried at room temperature for 2 hours and then by heating at 150°C for 30 minutes in an electric drying oven of natural convection type to form a membrane structure. The OTR (JIS Z0208) of the resulting membrane structure was determined in an environment of 23°C and 70% RH. The result is shown in Table 6.

Example 31 to 38

An aqueous dispersion having the composition shown in Table 6 was prepared and evaluated in the same manner as in Example 30. The results obtained are shown in Table 6.

Comparative Example 6

In this comparative example, the inorganic layered compound and the basic substance used in Example 30 were not used. The composition of the aqueous dispersion prepared is shown in Table 7. The dispersion was evaluated in the same manner as in Example 30. The results are shown in Table 7.

Table 6

| | | | Example | | | | | | | | |
|---|---|---|---|---|---|---|---|---|---|---|---|
| | | | 30 | 31 | 32 | 33 | 34 | 35 | 36 | 37 | 38 |
| Aqueous Dispersion | Cellulose Microfibers | Solid Concentration (%) | 1.30 | 1.30 | 1.30 | 1.30 | 1.30 | 1.30 | 1.30 | 1.30 | 1.30 |
| | Inorganic Layered Compound | Mass Ratio (Inorganic Layered Compound/Cellulose Fibers) | 0.5 | 0.5 | 0.5 | 0.5 | 0.5 | 0.5 | 0.5 | 0.5 | 0.5 |
| | Basic Substance | Kind | NaOH | NaOH | NaOH | NaOH | NaOH | KOH | $NaHCO_3$ | $Na_2CO_3$ | $NH_3$ |
| | | Mass Ratio (Basic Substance/ Inorganic Layered Compound) | 0.003 | 0.023 | 0.030 | 0.100 | 0.169 | 0.100 | 0.010 | 0.010 | 0.010 |
| | pH | | 8.3 | 8.6 | 8.7 | 10.0 | 11.7 | 10.1 | 7.1 | 8.6 | 10.3 |
| Membrane | OTR at 23°C, 70% RH ($\times 10^{-5}$ $cm^3/(m^2 \cdot day \cdot Pa)$) | | 0.6 | 0.3 | 0.4 | 0.4 | 0.5 | 0.6 | 0.5 | 0.6 | 0.7 |
| | Coloration | | no | no | yes | yes | yes | no | no | no | no |

Table 7

| | | | Comp. Example 6 |
|---|---|---|---|
| Aqueous Dispersion | Cellulose Microfibers | Solid Concentration (%) | 1.30 |
| | Inorganic Layered Compound | Mass Ratio (Inorganic Layered Compound/ Cellulose Fibers) | |
| | Basic Substance | Kind | - |
| | | Mass Ratio (Basic Substance/Inorganic Layered Compound) | - |
| | pH | | 5.7 |
| Membrane | OTR at 23°C, 70% RH ($\times 10^{-5}$ $cm^3/(m^2 \cdot day \cdot Pa)$) | | 38 |
| | Coloration | | no |

As is apparent from the results in Tables 6 and 7, the membrane structures prepared from the aqueous dispersions of Examples are superior in oxygen gas barrier properties in a high humidity environment to the membrane structure prepared from the aqueous dispersion of Comparative Example 6.

## Claims

1. A membrane structure comprising cellulose microfibers and an inorganic layered compound, cellulose constituting the cellulose microfibers having a carboxyl content of 0.1 to 3 mmol/g, and the mass ratio of the inorganic layered compound to the cellulose microfibers being 0.01 to 100, wherein the cellulose microfibers have an average fiber diameter of 200 nm or smaller.

2. The membrane structure according to claim 1, wherein the inorganic layered compound has an amount of charge of 1 to 1000 eq/g.

3. The membrane structure according to claim 1 or 2, wherein the inorganic layered compound has an average particle size of 0.01 to 10 μm.

4. The membrane structure according to any one of claims 1 to 3, wherein the inorganic layered compound is montmorillonite or tetrasilicic mica.

5. The membrane structure according to any one of claims 1 to 4, further comprising a crosslinking agent.

6. A process for making the membrane structure according to any one of claims 1 to 5, comprising the steps of

   (b) mixing an inorganic layered compound and cellulose microfibers to prepare an aqueous dispersion and
   (c) forming a coating film of the aqueous dispersion and drying the coating film.

7. The process according to claim 6, wherein in step (b), coarse particles of the inorganic layered compound are separated from the aqueous dispersion, after preparation of the aqueous dispersion.

8. The process according to claim 6 or 7, further comprising the step of (a) dispersing the inorganic layered compound in a liquid medium to prepare a dispersion prior to step (b).

9. The process according to claim 8, wherein in step (a), coarse particles of the inorganic layered compound are separated from the dispersion, after preparation of the dispersion.

10. The process according to claim 7 or 9, wherein the separation of coarse particles is carried out by filtration or centrifugation.

**11.** An aqueous dispersion used to form a gas barrier membrane structure, comprising cellulose microfibers having a carboxyl content of 0.1 to 3 mmol/g, an inorganic layered compound, and a basic substance, wherein the mass ratio of the inorganic layered compound to the cellulose microfibers is 0.01 to 100 and wherein the cellulose microfibers have an average fiber diameter of 200 nm or smaller.

**12.** The aqueous dispersion according to claim 11, wherein the basic substance is volatile.

**13.** The aqueous dispersion according to claim 11 or 12, wherein the mass ratio of the basic substance to the inorganic layered compound is 0.001 to 10.

**14.** A gas barrier membrane structure prepared using the aqueous dispersion according to any one of claims 11 to 13.

**15.** A method for preparing the aqueous dispersion as defined in any one of claims 11 to 13, comprising mixing an aqueous dispersion containing an inorganic layered compound and a basic substance with cellulose microfibers having a carboxyl content of 0.1 to 3 mmol/g, wherein the cellulose microfibers have an average fiber diameter of 200 nm or smaller.

**16.** A method for preparing the aqueous dispersion as defined in any one of claims 11 to 13, comprising mixing an aqueous dispersion containing inorganic layered compound and cellulose microfibers having a carboxyl content of 0.1 to 3 mmol/g with a basic substance, wherein the cellulose microfibers have an average fiber diameter of 200 nm or smaller.

**Patentansprüche**

**1.** Membranstruktur, enthaltend Cellulose-Mikrofasern und eine anorganische geschichtete Verbindung, wobei die Cellulose, die die Cellulose-Mikrofasern konstituiert, einen Carboxylgehalt von 0,1 bis 3 mmol/g hat und das Massenverhältnis der anorganischen geschichteten Verbindung zu den Cellulose-Mikrofasern 0,01 bis 100 ist, worin die Cellulose-Mikrofasern einen durchschnittlichen Faserdurchmesser von 200 nm oder kleiner haben.

**2.** Membranstruktur gemäß Anspruch 1, worin die anorganische geschichtete Verbindung eine Ladungsmenge von 1 bis 1.000 Äq/g hat.

**3.** Membranstruktur gemäß Anspruch 1 oder 2, worin die anorganische geschichtete Verbindung eine durchschnittliche Teilchengröße von 0,01 bis 10 $\mu$m hat.

**4.** Membranstruktur gemäß einem der Ansprüche 1 bis 3, worin die anorganische geschichtete Verbindung Montmorillonit oder tetrasilizides Mika ist.

**5.** Membranstruktur gemäß einem der Ansprüche 1 bis 4, weiterhin enthaltend ein Vernetzungsmittel.

**6.** Verfahren zur Erzeugung der Membranstruktur gemäß einem der Ansprüche 1 bis 5, enthaltend die Schritte:

(b) Mischen einer anorganischen geschichteten Verbindung und Cellulose-Mikrofasern, zur Herstellung einer wässrigen Dispersion, und
(c) Bilden eines Beschichtungsfilmes aus der wässrigen Dispersion und Trocknen des Beschichtungsfilmes.

**7.** Verfahren gemäß Anspruch 6, worin im Schritt (b) grobe Teilchen aus der anorganischen geschichteten Verbindung von der wässrigen Dispersion nach Herstellung der wässrigen Dispersion getrennt werden.

**8.** Verfahren gemäß Anspruch 6 oder 7, weiterhin enthaltend den Schritt (a) des Dispergierens der anorganischen geschichteten Verbindung in einem flüssigen Medium, zur Herstellung einer Dispersion vor dem Schritt (b).

**9.** Verfahren gemäß Anspruch 8, worin im Schritt (a) grobe Teilchen aus der anorganischen geschichteten Verbindung von der Dispersion nach Herstellung der Dispersion getrennt werden.

**10.** Verfahren gemäß Anspruch 7 oder 9, worin die Trennung der groben Teilchen durch Filtration oder Zentrifugation durchgeführt wird.

**11.** Wässrige Dispersion, die zur Bildung einer Gassperr-Membranstruktur verwendet wird, enthaltend Cellulose-Mikrofasern mit einem Carboxylgehalt von 0,1 bis 3 mmol/g, eine anorganische geschichtete Verbindung und eine basische Substanz, worin das Massenverhältnis der anorganischen geschichteten Verbindung zu den Cellulose-Mikrofasern 0,01 bis 100 ist und worin die Cellulose-Mikrofasern einen durchschnittlichen Faserdurchmesser von 200 nm oder kleiner haben.

**12.** Wässrige Dispersion gemäß Anspruch 11, worin die basische Substanz flüchtig ist.

**13.** Wässrige Dispersion gemäß Anspruch 11 oder 12, worin das Massenverhältnis der basischen Substanz zu der anorganischen geschichteten Verbindung 0,001 bis 10 ist.

**14.** Gassperr-Membranstruktur, hergestellt unter Verwendung der wässrigen Dispersion gemäß einem der Ansprüche 11 bis 13.

**15.** Verfahren zur Herstellung der wässrigen Dispersion wie in einem der Ansprüche 11 bis 13 definiert, enthaltend das Mischen einer wässrigen Dispersion, die eine anorganische geschichtete Verbindung und eine basische Substanz enthält, mit Cellulose-Mikrofasern mit einem Carboxylgehalt von 0,1 bis 3 mmol/g, worin die Cellulose-Mikrofasern einen durchschnittlichen Faserdurchmesser von 200 nm oder kleiner haten.

**16.** Verfahren zur Herstellung der wässrigen Dispersion wie in einem der Ansprüche 11 bis 13 definiert, enthaltend das Mischen einer wässrigen Dispersion, die eine anorganische geschichtete Verbindung und Cellulose-Mikrofasern mit einem Carboxylgehalt von 0,1 bis 3 mmol/g enthält, mit einer basischen Substanz, worin die Cellulose-Mikrofasern einen durchschnittlichen Faserdurchmesser von 200 nm oder kleiner haben.

## Revendications

**1.** Structure membranaire comprenant des microfibres de cellulose et un composé stratifié inorganique, la cellulose constituant les microfibres de cellulose présentant une teneur en carboxyle de 0,1 à 3 mmol/g, et le rapport massique du composé stratifié inorganique sur les microfibres de cellulose allant de 0,01 à 100, dans laquelle les microfibres de cellulose ont un diamètre de fibre moyen inférieur ou égal à 200 nm.

**2.** Structure membranaire selon la revendication 1, dans laquelle le composé stratifié inorganique présente une quantité de charge de 1 à 1000 éq/g.

**3.** Structure membranaire selon la revendication 1 ou 2, dans laquelle le composé stratifié inorganique présente une taille de particule moyenne de 0,01 à 10 $\mu$m.

**4.** Structure membranaire selon l'une quelconque des revendications 1 à 3, dans laquelle le composé stratifié inorganique est de la montmorillonite ou du mica tétrasilicique.

**5.** Structure membranaire selon l'une quelconque des revendications 1 à 4, comprenant en outre un agent de réticulation.

**6.** Procédé de préparation de la structure membranaire selon l'une quelconque des revendications 1 à 5, comprenant les étapes consistant à

(b) mélanger un composé stratifié inorganique à des microfibres de cellulose pour préparer une dispersion aqueuse et
(c) former un film de revêtement de la dispersion aqueuse et sécher le film de revêtement.

**7.** Procédé selon la revendication 6, dans laquelle à l'étape (b), les particules grossières du composé stratifié inorganique sont séparées de la dispersion aqueuse, après la préparation de la dispersion aqueuse.

**8.** Procédé selon la revendication 6 ou 7, comprenant en outre l'étape de (a) dispersion du composé stratifié inorganique dans un milieu liquide pour préparer une dispersion avant l'étape (b).

**9.** Procédé selon la revendication 8, dans lequel à l'étape (a), les particules grossières du composé stratifié inorganique sont séparées de la dispersion, après la préparation de la dispersion.

10. Procédé selon la revendication 7 ou 9, dans lequel la séparation des particules grossières est réalisée par filtration ou centrifugation.

11. Dispersion aqueuse utilisée pour former une structure membranaire de barrière aux gaz, comprenant des microfibres de cellulose présentant une teneur en carboxyle de 0,1 à 3 mmol/g, un composé stratifié inorganique et une substance basique, dans laquelle le rapport massique du composé stratifié inorganique sur les microfibres de cellulose va de 0,01 à 100 et dans laquelle les microfibres de cellulose ont un diamètre de fibre moyen inférieur ou égal à 200 nm.

12. Dispersion aqueuse selon la revendication 11, dans laquelle la substance basique est volatile.

13. Dispersion aqueuse selon la revendication 11 ou 12, dans laquelle le rapport massique de la substance basique sur le composé stratifié inorganique va de 0,001 à 10.

14. Structure membranaire de barrière aux gaz préparée en utilisant la dispersion aqueuse selon l'une quelconque des revendications 11 à 13.

15. Procédé de préparation de la dispersion aqueuse selon l'une quelconque des revendications 11 à 13, comprenant le mélange d'une dispersion aqueuse contenant un composé stratifié inorganique et d'une substance basique avec des microfibres de cellulose présentant une teneur en carboxyle de 0,1 à 3 mmol/g, dans laquelle les microfibres de cellulose ont un diamètre de fibre moyen inférieur ou égal à 200 nm.

16. Procédé de préparation de la dispersion aqueuse selon l'une quelconque des revendications 11 à 13, comprenant le mélange d'une dispersion aqueuse contenant un composé stratifié inorganique et des microfibres de cellulose présentant une teneur en carboxyle de 0,1 à 3 mmol/g à une substance basique, dans laquelle les microfibres de cellulose ont un diamètre de fibre moyen inférieur ou égal à 200 nm.

Fig. 1 (a)

Example 15

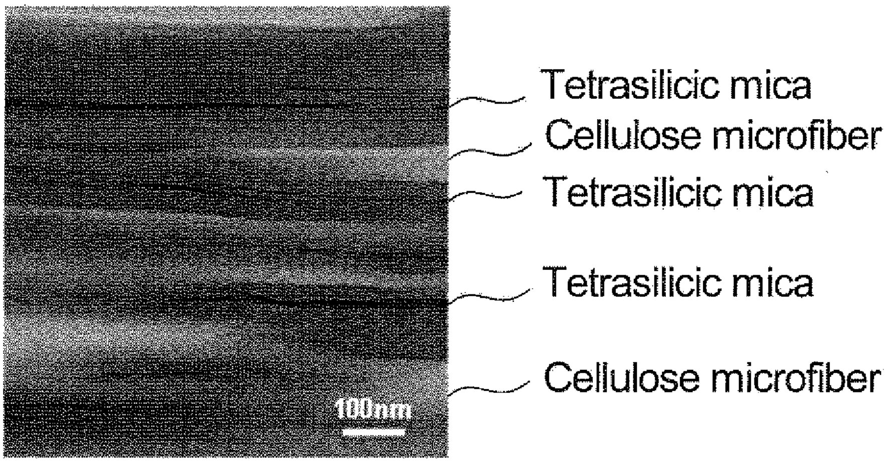


Fig. 1 (b)

Example 15

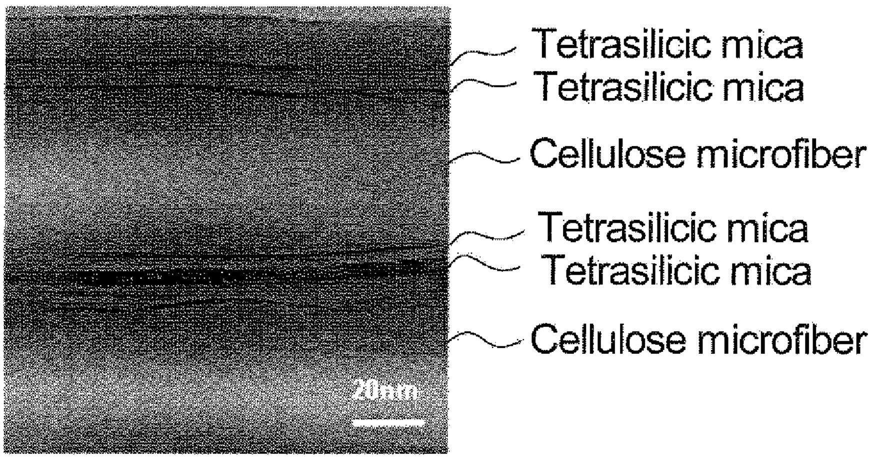

Fig. 2 (a)

Example 17

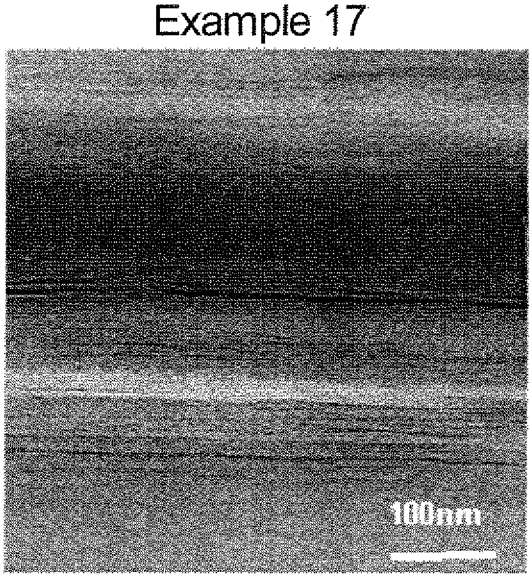


Fig. 2 (b)

Example 17

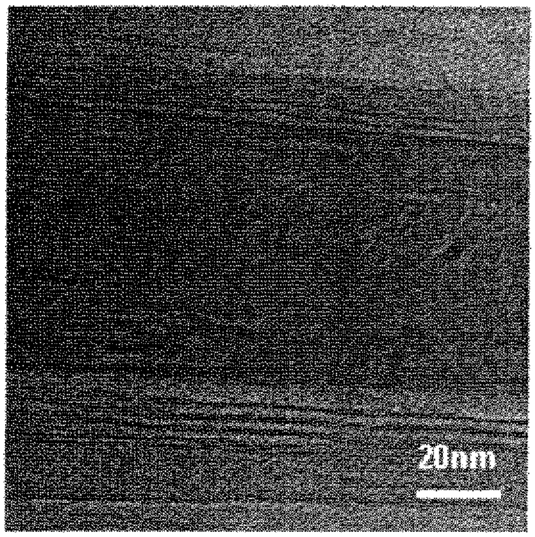

Fig. 3 (a)

Comparative Example 1

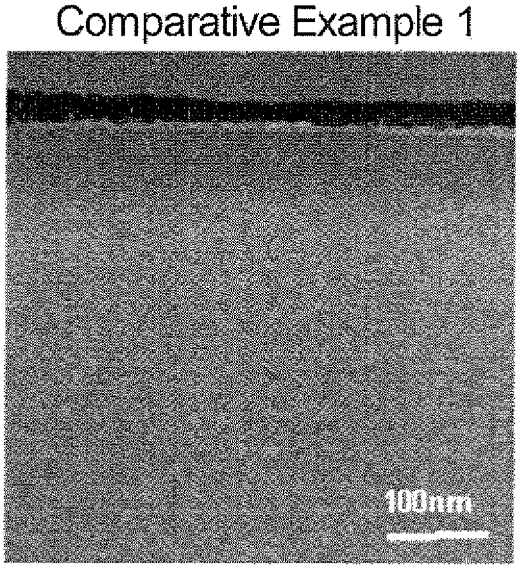


Fig. 3 (b)

Comparative Example 1

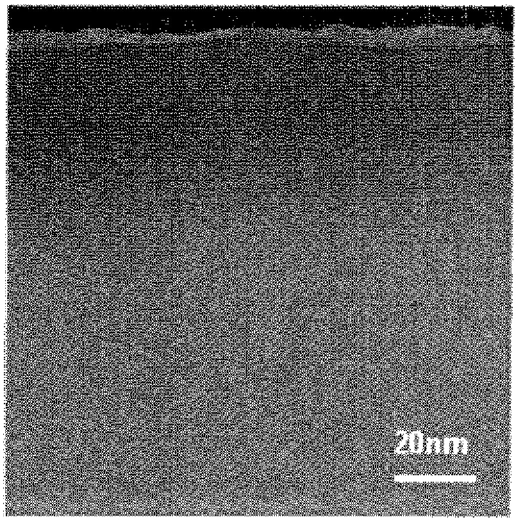

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009057552 A
- JP 2001121659 A
- JP 2008049606 A


### Non-patent literature cited in the description


- **M. DOI ; S.F. EDWARDS.** The Theory of Polymer Dynamics. Clarendon Press, 1986, 312